# EUROPÄISCHE PATENTSCHRIFT

(11) **EP 2 365 912 B1**
(45) Veröffentlichungstag und Bekanntmachung des Hinweises auf die Patenterteilung: **04.09.2013**
(21) Anmeldenummer: 09771338.2
(22) Anmeldetag: 09.12.2009
(51) Int. Cl.: B60G 3/02, B60G 7/00, B60G 21/055

(54) **SCHRÄGLENKER-ACHSE FÜR EIN KRAFTFAHRZEUG**
SEMI-TRAILING ARM AXLE FOR A MOTOR VEHICLE
ESSIEU À BRAS OBLIQUES POUR UN VÉHICULE AUTOMOBILE

(30) Priorität: 15.12.2008 DE 102008054670
(43) Veröffentlichungstag der Anmeldung: 21.09.2011
(73) Patentinhaber: ZF Friedrichshafen AG, 88038 Friedrichshafen (DE)
(72) Erfinder: WAGNER, Volker, 74523 Schwäbisch Hall (DE); FRUHMANN, Gabriele, A-6900 Bregenz (AT); POLLMEYER, Stephan, 88045 Friedrichshafen (DE)
(86) Internationale Anmeldenummer: PCT/EP2009/066661
(87) Internationale Veröffentlichungsnummer: WO 2010/072564

(56) Entgegenhaltungen:
- EP-A2- 1 361 084
- FR-A- 1 451 022
- GB-A- 1 315 272
- US-A- 5 267 751

## Beschreibung

Die vorliegende Erfindung bezieht sich auf eine Schräglenker-Achse für ein Kraftfahrzeug.

Aus dem Stand der Technik sind Schräglenker-Achsen für Kraftfahrzeuge bekannt. Bei diesen Achsen ist der Radträger in einen starren Schräglenker integriert, der wiederum in der Regel über zwei Gummilager am Aufbau oder einem Hilfsrahmen drehbar gelagert ist, wobei die Räder der Achse über zumindest die Radlager am Schräglenker gelagert sind. Über den Pfeilungs- und Dachwinkel lassen sich Spur- und Sturzverlauf über dem Federweg einstellen. Neben dem Schräglenker, der als einziges radführendes Element dient, besitzt die Schräglenkerachse pro Rad eine Aufbaufeder, die üblicherweise als Spiralfeder ausgeführt ist und einen Schwingungsdämpfer, die jeweils am Schräglenker befestigt werden. Die Schräglenker können auch an einem Hilfsrahmen befestigt sein, der das Bindeglied zur Fahrzeugkarosserie oder zum Fahrzeugchassis darstellt.

Beispielsweise geht aus der EP 0754575 B1 eine Schräglenkeraufhängung zur Verbindung eines Fahrzeugsrads mit einer Fahrzeugkarosserie hervor, wobei die Aufhängung einen Radträger zum drehbaren Stützen des Rads, ein Federmittel zur Vorspannung des Radträgers in einer nach unten verlaufenden Richtung bezüglich der Karosserie und eine Gelenkmechanismusanordnung zur Steuerung der Bewegung des Radträgers bezüglich der Fahrzeugkarosserie aufweist, wobei die Gelenkmechanismusanordnung einen ersten Lenker aufweist mit einem nach innen gerichteten Ende, das mit einem Teil der Fahrzeugkarosserie zur Drehung bezüglich dieser um eine allgemein horizontale Drehachse verbunden ist, und einem mit dem Radträger verbundenen äußeren Ende, wobei sich der erste Lenker bezüglich der Fahrzeugkarosserie von dem nach innen gerichteten Ende zu dem nach außen gerichteten Ende nach hinten und nach außen erstreckt.

Die bekannte Schräglenkeraufhängung umfasst ein Verbindungsmittel mit einem zweiten Lenker mit einem ersten Ende, das mit einem Teil der Fahrzeugkarosserie zur Drehung bezüglich dieser um eine allgemein horizontale Achse verbunden ist, und einem mit dem Radträger verbundenen zweiten Ende, wobei sich der Radträger um eine im wesentlichen vertikale Achse bezüglich des ersten Lenkers drehen kann, und wobei das Verbindungsmittel einen weiteren Gelenkmechanismus enthält, der mit einem Teil der Fahrzeugkarosserie an einer Stelle verbunden ist, die bezüglich der Stelle, an der der zweite Lenker mit der Fahrzeugkarosserie verbunden ist, außen, und rückwärtig einer zwischen der Verbindungsstelle des ersten Lenkers mit der Karosserie und der Verbindungsstelle des zweiten Lenkers mit der Fahrzeugkarosserie verlaufenden gedachten Linie liegt. Hierbei ist vorgesehen, dass sich der erste Lenker in einer allgemein quer verlaufenden Richtung erstreckt, dass der zweite Lenker vor dem ersten Lenker angeordnet ist und dass der erste und der zweite Lenker derart konvergieren, dass sich durch die Verbindungsstellen des ersten und des zweiten Lenkers mit dem Radträger und der Fahrzeugkarosserie verlaufende gedachte Linien in einem außerhalb der Mitte des Rads und rückwärtig der Drehachse des Rads liegenden Punkt schneiden, so dass der weitere Gelenkmechanismus dazu neigt, zu bewirken, dass sich der Radträger als Reaktion auf eine Vertikalbewegung des Rads bezüglich der Fahrzeugkarosserie um die im wesentlichen vertikale Achse dreht. Vorzugsweise ist hierbei der weitere Gelenkmechanismus über den zweiten Lenker mit dem Radträger verbunden.

Ferner ist aus der EP 1288028 A2 eine Einzelradaufhängung einer Schräglenker-Achse mit mindestens zwei Freiheitsgraden bekannt, die mindestens zwei flexible Lenker aufweist, die mit dem jeweiligen Radträger und dem Aufbau verbunden sind, wobei die Lenker bedingt durch deren flexible Ausgestaltung und Geometrie einen dritten Freiheitsgrad der Einzelradaufhängung um eine Achse mit einer vorgegebenen Orientierung ermöglichen, wobei sich die Achse aus dem Schnitt der Ebenen der zwei Lenker ergibt.

Aus der EP 1831037 A1 geht eine gefederte Achse für ein Fahrzeug hervor, umfassend für jedes Rad einen Lenker, der mit dem Aufbau des Fahrzeugs verbunden ist und einen Federweg des Rades ermöglicht sowie ein quer angeordnetes Torsionselement, wobei jedes Ende des Torsionselementes mit dem dem jeweiligen Rad zugeordneten Lenker starr verbunden ist, um jeweils einen starren Teil der Achse zu bilden, wobei die beiden starren Teile der Achse über ein Torsionsteil miteinander verbunden sind und die Radträger über einen ersten und einen zweiten Lenker mit jeweils einem starren Teil der Achse verbunden sind. Hierbei werden durch die gelenkigen Verbindungen zwischen den Radträgern und den ersten und zweiten Lenkern sowie zwischen den ersten und zweiten Lenkern und den starren Teilen der Achse im Wesentlichen senkrechte Achsen definiert.

Der vorliegenden Erfindung liegt die Aufgabe zugrunde, eine Schräglenker-Achse für ein Kraftfahrzeug anzugeben, durch deren Verwendung im Gegensatz zu einer herkömmlichen Schräglenker - Achse ein in Nachspur gehen unter Seiten- und Bremskräften vermieden wird. Zudem soll der Effekt erzielt werden, dass die Räder der Achse unter Seiten- und Bremskräften in Vorspur gehen, was in einem untersteuernden bis neutralen Fahrverhalten resultiert.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird eine Schräglenker-Achse für ein Kraftfahrzeug vorgeschlagen, welche anstelle eines starren Lenkers für jedes Rad der Achse einen um die Hochachse flexiblen Lenker aufweist, der die Radführung übernimmt. Hierbei ist der flexible Schräglenker über zumindest ein Lager, das vorzugsweise als Gummilager ausgeführt ist, am Aufbau oder an einem Hilfsrahmen gelagert, wobei jedes Rad der Achse über zumindest ein Radlager mit dem flexiblen Schräglenker verbunden ist, wodurch der flexible Schräglenker die alleinige Radführung übernimmt. Dabei kann ein Rad einen einzelnen Reifen oder mehrere unmittelbar nebeneinander angeordnete Reifen, beispielsweise eine Zwillingsbereifung, umfassen.

Der flexible Schräglenker kann gemäß der Erfindung besonders vorteilhaft als Blech- oder Faserverbund-Bauteil ausgeführt sein, da derartige Bauteile gut formbar sind, wodurch deren Steifigkeit sehr gut einstellbar ist.

Der flexible Schräglenker weist einen virtuellen Drehpunkt auf, der bei Seiten- und Bremskräften für ein in Vorspur gehen des jeweiligen Rades sorgt, wodurch in vorteilhafter Weise ein Seitenkraftübersteuern des Fahrzeugs verhindert wird. Besonders vorteilhaft bei Seitenkräften ist es, wenn der virtuelle Drehpunkt in Vorwärtsfahrtrichtung hinter der Seitenkrafteinleitung liegt; ferner kann der virtuelle Drehpunkt außerhalb der Bremskrafteinleitung in Fahrzeug-Querrichtung liegen, was unter Bremskräften die Spur positiv beeinflusst.

Die Erfindung wird im folgenden anhand der beigefügten Figuren beispielhaft näher erläutert. Es zeigen:
- Figur 1:: Eine schematische Draufsicht der Radaufhängung einer erfindungsgemäßen Schräglenker-Achse;
- Figur 2:: Eine schematische Rückansicht der Radaufhängung einer erfindungsgemäßen Schräglenker-Achse;
- Figur 3:: Ein Ersatzmodell der in Figur 1 gezeigten der Radaufhängung einer erfindungsgemäßen Schräglenker-Achse;
- Figur 4:: Eine schematische Darstellung der Spuränderung der erfindungsgemäßen Schräglenker-Achse unter einer Seitenkraft; und
- Figur 5:: Eine schematische Darstellung der Spuränderung der erfindungsgemäßen Schräglenker-Achse unter einer Bremskraft.

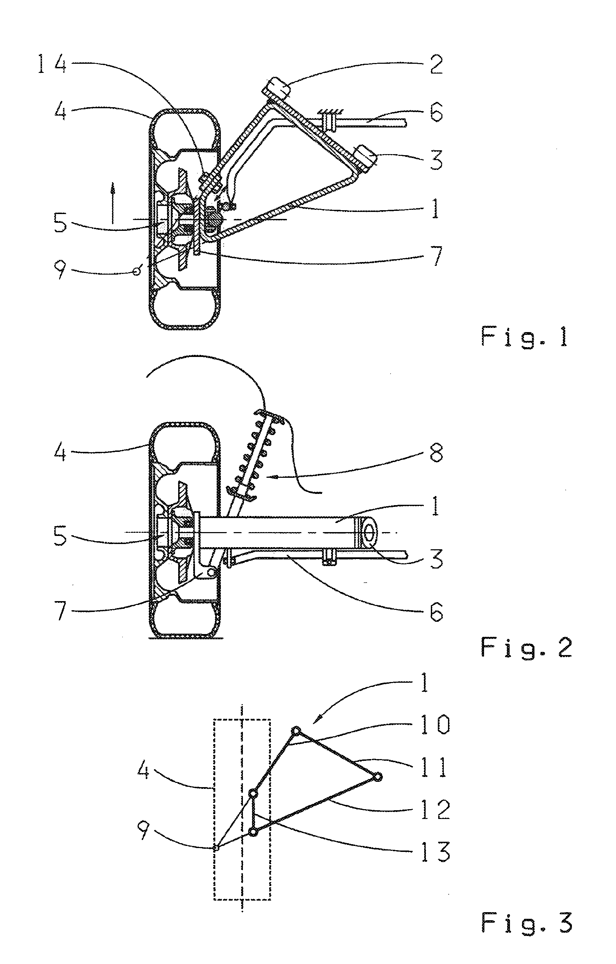

Gemäß der Erfindung und bezugnehmend auf Figuren 1 und 2 umfasst die erfindungsgemäße Achse anstelle eines starren Lenkers für jedes Rad 4 der Achse einen um die Hochachse flexiblen Schräglenker 1, welcher die Radführung übernimmt und über zwei Lager 2, 3, die vorzugsweise als Gummilager ausgeführt sind, am Aufbau oder an einem Hilfsrahmen gelagert ist.

Wie aus Figuren 1 und 2 ersichtlich, ist jedes Rad 4 der Achse über ein Radlager 5 und einen Radträger 7 mit dem jeweiligen flexiblen Schräglenker 1 verbunden, wodurch der flexible Schräglenker 1 die alleinige Radführung übernimmt. Der virtuelle Drehpunkt des flexiblen Schräglenkers 1 ist in Figur 1 dargestellt und mit 9 bezeichnet; ferner ist in Figuren 1 und 2 mit dem Bezugszeichen 6 ein an sich bekannter Stabilisator bezeichnet, weicher insbesondere an einem Dämpfer, an dem Radträger 7 oder, wie dargestellt, an dem flexiblen Schräglenker 1 angebunden sein kann. Die Vorwärtsfahrtrichtung ist in Figur 1 auf der linken Seite durch den senkrechten Pfeil angedeutet. Der flexible Schräglenker 1 ist in der in Fig. 1 gezeigten Ausgestaltung der Erfindung einstückig ausgeführt, dessen Enden aneinander anliegend verschraubt sind. Zumindest eine der Verbindungsschrauben 14 weist dabei einen Exzenter auf, welcher es erlaubt, die Enden gegeneinander entlang des Doppelpfeils zu verschieben, wodurch die Spur des Schräglenkers 1 auf einfache Weise einstellbar ist.

Die erfindungsgemäße Achse umfasst gemäß Figur 2 für jede Radaufhängung eine am Radträger 7 angebundene Federdämpfereinheit 8, welche der Aufbaufederung und -dämpfung dient. Dabei kann unter einer Federdämpfereinheit 8 auch eine getrennte Anordnung zumindest einer Feder und eines Dämpfers verstanden werden, welche eine funktionelle Einheit zur Aufbaufederung und -dämpfung bilden. Gemäß einer nicht dargestellten Ausführungsform der Erfindung kann die Federdämpfereinheit 8 auch am flexiblen Schräglenker 1 befestigt sein. Zur Aufbaufederung und -dämpfung kann jedoch auch insbesondere zumindest eine Querblattfeder und für jede Radaufhängung zumindest ein Dämpfer vorsehen sein, welche jeweils mit dem Radträger 7 oder mit dem flexiblen Schräglenker 1 verbunden sein können. Querblattfedern haben dabei Vorzüge im Bezug auf Funktionsintegration, da sich eine Aufbaufederung, ein Lenker und/oder ein Stabilisator auf einfache Weise in einer Querblattfeder vereinen lassen.

Wie in Fig. 3 dargestellt, wird der flexibel ausgeführten Schräglenker 1 besonders bevorzugt koppelgetriebeartig aus im Wesentlichen vier in einer Ebene ein Viereck bildenden Gliedern 10, 11, 12, 13 gebildet, welche durch Koppelbereiche miteinander gekoppelt sind. Hierbei ist der Schräglenker 1 über das erste Glied 11 am Aufbau oder an einem Hilfsrahmen befestigt, wobei er über das zweite Glied 13 mit dem Rad 4 verbunden ist. Dabei sind das erste und zweite Glied 11 und 13 durch die weiteren Glieder 10 und 12 miteinander verbunden, wobei die die Glieder 10, 11, 12, 13 koppelnden und hier als Gelenke dargestellte Koppelbereiche des flexiblen Schräglenkers 1 gezielt eingebrachte Steifigkeiten aufweisen, um die erfindungsgemäße Flexibilität des Schräglenkers 1 herzustellen.

Das erste Glied 11 ist hierbei über zumindest ein Lager, das vorzugsweise als Gummilager ausgeführt ist, am Aufbau oder einem Hilfsrahmen befestigt, wobei das zweite Glied 13 den Schräglenker 1 über zumindest ein hier nicht gezeigtes Radlager mit dem Rad 4 verbindet. Die Lage des virtuellen Drehpunkts 9 ist durch den Schnittpunkt zweier Geraden definiert, welche jeweils durch die beiden Koppelbereiche eines der weiteren Glieder 10, 12 mit dem ersten und zweiten Glied 11, 13 verlaufen. Die durch die konstruktive Ausführung des flexiblen Schräglenkers 1 bewirkte Position des virtuellen Drehpunkts 9 zusammen mit der Steifigkeit der Koppelbereiche des flexiblen Schräglenkers 1 bestimmen dabei den Betrag der Vorspuränderung bei einer bestimmten Seiten- bzw. Bremskraft.

Ebenso wie die die Glieder 10, 11, 12, 13 koppelnden Koppelbereiche können die Glieder 10,11,12,13 selbst mit gezielt eingebrachten Steifigkeiten versehen sein, um die erfindungsgemäße Flexibilität des Schräglenkers 1 herzustellen. Die Steifigkeiten können sowohl durch den Werkstoff, als auch durch die Formgebung der Glieder 10, 11, 12, 13 beziehungsweise der Koppelbereiche bewirkt werden. Insbesondere Glieder 10, 11, 12, 13 aus Blech - oder Faserverbundteilen eigenen sich hierbei aus den genannten Gründen besonders gut.

Wie in Fig. 1 dargestellt, können die Glieder 10, 11, 12, 13 und Koppelbereiche einen einstückigen Schräglenker 1 bilden, wobei die Glieder 10, 11, 12, 13 und Koppelbereiche dann einzelne Abschnitte des Schräglenkers 1 sind. Unter einem Glied 10, 11, 12, 13 oder einem Koppelbereich des Schräglenkers 1 ist daher nicht ausschließlich jeweils ein einzelnes Bauteil zu verstehen, insbesondere kann das erste oder das zweite Glied 11, 13 mit einem oder beiden weiteren Gliedern 10, 12 und den entsprechenden Koppelbereichen ein einstückiges Bauteil des Schräglenkers 1 bilden.

Die erfindungsgemäße Position des virtuellen Drehpunkts 9 hinter einer Seitenkrafteinleitung und/oder außerhalb einer Bremskrafteinleitung sorgt unter Seiten- oder Bremskräften für ein in Vorspur gehen des jeweiligen Rades 4, wodurch in vorteilhafter Weise ein Seitenkraftübersteuern des Fahrzeugs verhindert wird und unter Bremskräften die Spur positiv beeinflusst wird.

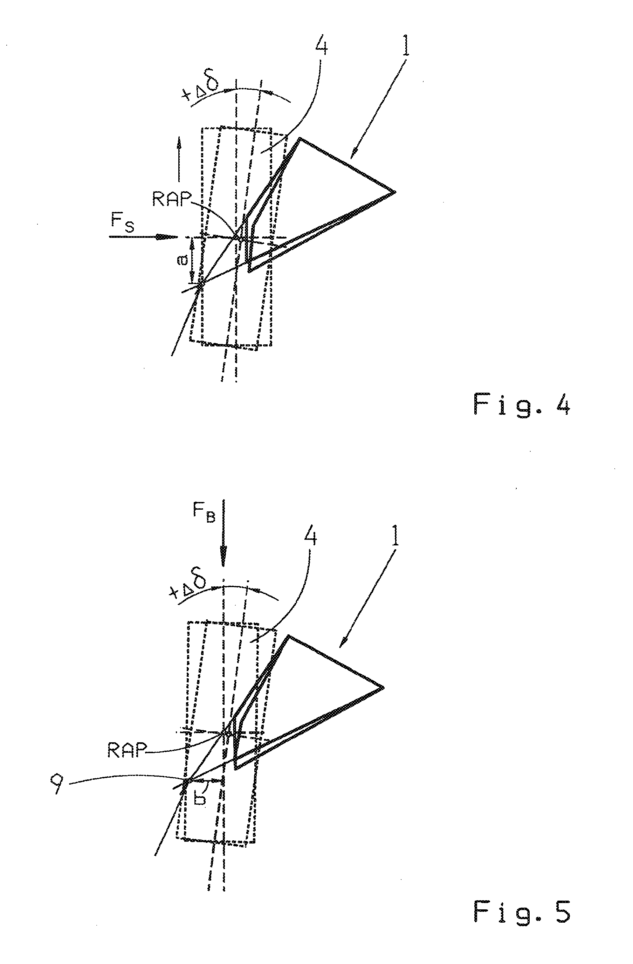

Die Spuränderung unter einer Seitenkraft wird in Figur 4 veranschaulicht. Hierbei ist die Seitenkraft mit F_{S} und die Spuränderung mit Δδ bezeichnet; der Radaufstandspunkt in weichem die Seitenkrafteinleitung erfolgt ist mit RAP bezeichnet. Wie aus Figur 4 ersichtlich, ist der flexible Schräglenker 1 derart ausgeführt, dass der virtuelle Drehpunkt 9 in Vorwärtsfahrtrichtung, die durch den senkrechten Pfeil angedeutet ist, hinter der Seitenkrafteinleitung liegt. Diese Abweichung entlang der Vorwärtsfahrtrichtung zwischen der Seitenkrafteinleitung und dem virtuellem Drehpunkt 9 ist mit a bezeichnet.

Erfingdungsgemäß ist der flexible Schräglenker 1 zudem derart ausgeführt, dass der virtuelle Drehpunkt 9 außerhalb der Bremskrafieinleitung in Fahrzeug-Querrichtung, im Sinne von in Richtung der dem Schräglenker 1 abgewandten Seite des Rades 4 liegt, was unter Bremskräften die Spur positiv beeinflusst. Dies wird anhand Figur 5 veranschaulicht, wobei die Bremskraft mit F_{B} und die Spuränderung mit Δδ bezeichnet ist; die Bremskrafteinleitung erfolgt ebenfalls in dem mit RAP bezeichnen Radaufstandspunkt. In Figur 5 ist die Abweichung des virtuellen Drehpunktes 9 von der Bremskrafteinleitung in Fahrzeug-Querrichtung mit b bezeichnet.

Ein weiterer Vorteil der Erfindung besteht darin, dass ein flachbauendes Achskonzept realisiert wird, da die Federdämpfereinheit 8 keine Radführung übernehmen muss und eine obere Lenkerebene, wie diese aus Schwertlenker- oder Doppelquerienkerachsen bekannt ist, entfällt.

### Bezugszeichen

- 1: flexibler Schräglenker
- 2: Lager
- 3: Lager
- 4: Rad
- 5: Radlager
- 6: Stabilisator
- 7: Radträger
- 8: Federdämpfereinheit
- 9: virtueller Drehpunkt
- 10: erstes Glied des flexiblen Schräglenkers 1
- 11: weiteres Glied des flexiblen Schräglenkers 1
- 12: weiteres Glied des flexiblen Schräglenkers 1
- 13: zweites Glied des flexiblen Schräglenkers 1
- 14: Verbindungsschraube
- RAP: Radaufstandspunkt
- Δδ: Spuränderung
- F_{S}: Seitenkraft
- F_{B}: Bremskraft
- a: Abweichung des virtuellen Drehpunktes 9 von der Seitenkrafteinleitung entlang der Vorwärtsfahrtrichtung
- b: Abweichung des virtuellen Drehpunktes 9 von der Bremskrafteinleitung in Fahrzeug-Querrichtung

## Patentansprüche

1. Schräglenker-Achse für ein Kraftfahrzeug, **dadurch gekennzeichnet, dass** sie für jedes Rad (4) der Achse einen um die Hochachse flexiblen Schräglenker (1) aufweist, der über zumindest ein Lager (2, 3) am Aufbau oder an einem Hilfsrahmen gelagert ist, wobei jedes Rad (4) der Achse über zumindest ein Radlager (5) mit dem jeweiligen flexiblen Schräglenker (1) verbunden ist, wodurch der flexible Schräglenker (1) die alleinige Radführung übernimmt.

2. Schräglenker-Achse für ein Kraftfahrzeug, nach Anspruch 1, **dadurch gekennzeichnet, dass** der Schräglenker (1) aus vier ein Viereck bildende und durch Koppelbereiche gekoppelte Glieder (10, 11, 12, 13) besteht, und die Koppelbereiche über gezielt eingebrachte Steifigkeiten verfügen, wobei ein erstes Glied (11) über zumindest ein Lager am Aufbau oder an einem Hilfsrahmen befestigt ist, ein zweites Glied (13) über zumindest das Radlager (5) mit dem Rad (4) verbunden ist und das erste und zweite Glied (11, 13) durch zwei weitere Glieder (10, 12) miteinander verbunden sind.

3. Schräglenker-Achse für ein Kraftfahrzeug, nach Anspruch 2, **dadurch gekennzeichnet, dass** die Glieder (10, 11, 12, 13) in einer Ebene ein Viereck bilden.

4. Schräglenker-Achse für ein Kraftfahrzeug, nach Anspruch 2, **dadurch gekennzeichnet, dass** ein virtueller Drehpunkt (9) des Schräglenkers (1) in Vorwärtsfahrtrichtung hinter einer Seitenkrafteinleitung liegt.

5. Schräglenker-Achse für ein Kraftfahrzeug, nach Anspruch 2, **dadurch gekennzeichnet, dass** ein virtueller Drehpunkt (9) des Schräglenkers (1) außerhalb einer Bremskrafteinleitung in Fahrzeug-Querrichtung liegt.

6. Schräglenker-Achse für ein Kraftfahrzeug, nach Anspruch 1, **dadurch gekennzeichnet, dass** der Schräglenker (1) als Blech- oder Faserverbund-Bauteil ausgeführt ist.

7. Schräglenker-Achse für ein Kraftfahrzeug, nach Anspruch 1, **dadurch gekennzeichnet, dass** für jede Radaufhängung eine Federdämpfereinheit (8) vorgesehen ist.

8. Schräglenker-Achse für ein Kraftfahrzeug, nach Anspruch 7, **dadurch gekennzeichnet, dass** die Federdämpfereinheit (8) am Schräglenker (1) oder an einem Radträger (7) befestigt ist.

9. Schräglenker-Achse für ein Kraftfahrzeug, nach Anspruch 1, **dadurch gekennzeichnet, dass** zumindest eine mit dem Schräglenker (1) oder mit einem Radträger (7) verbundene Querblattfeder und für jede Radaufhängung zumindest ein mit dem flexiblen Schräglenker (1) oder mit dem Radträger (7) verbundener Dämpfer vorgesehen ist.

10. Schräglenker-Achse für ein Kraftfahrzeug, nach Anspruch 1, **dadurch gekennzeichnet, dass** der Schräglenker (1) einstückig ausgeführt ist und dessen Enden miteinander verschraubt sind, wobei zumindest eine der Verbindungsschrauben (14) über einen Exzenter verfügt, über welchen die Spur des Schräglenkers (1) einstellbar ist.

11. Schräglenker-Achse für ein Kraftfahrzeug, nach Anspruch 1, **dadurch gekennzeichnet, dass** ein Stabilisator (6) an einem Dämpfer der Schräglenker-Achse, an dem flexiblen Schräglenker (1) oder an einem Radträger (7) angebunden ist.

## Claims

1. Semi-trailing link axle for a motor vehicle, **characterized in that**, for each wheel (4) of the axle, it has a semi-trailing link (1) which is flexible about the vertical axis and is mounted via at least one bearing (2, 3) on the vehicle body or on a subframe, each wheel (4) of the axle being connected via at least one wheel bearing (5) to the respective flexible semi-trailing link (1), as a result of which the flexible semi-trailing link (1) assumes the sole wheel control.

2. Semi-trailing link axle for a motor vehicle, according to Claim 1, **characterized in that** the semi-trailing link (1) consists of four members (10, 11, 12, 13) which form a quadrilateral and are coupled by coupling regions, and the coupling regions have stiffnesses which are introduced in a targeted manner, a first member (11) being fastened via at least one bearing to the vehicle body or to a subframe, a second member (13) being connected via at least the wheel bearing (5) to the wheel (4), and the first and second members (11, 13) being connected to one another by further members (10, 12).

3. Semi-trailing link axle for a motor vehicle, according to Claim 2, **characterized in that** the members (10, 11, 12, 13) form a quadrilateral in one plane.

4. Semi-trailing link axle for a motor vehicle, according to Claim 2, **characterized in that** a virtual pivot point (9) of the semi-trailing link (1) lies behind a lateral force introduction point in the forward driving direction.

5. Semi-trailing link axle for a motor vehicle, according to Claim 2, **characterized in that** a virtual pivot point (9) of the semi-trailing link (1) lies outside a brake force introduction point in the vehicle transverse direction.

6. Semi-trailing link axle for a motor vehicle, according to Claim 1, **characterized in that** the semi-trailing link (1) is configured as a sheet-metal or fibre-composite component.

7. Semi-trailing link axle for a motor vehicle, according to Claim 1, **characterized in that** a spring/damper unit (8) is provided for each wheel suspension system.

8. Semi-trailing link axle for a motor vehicle, according to Claim 7, **characterized in that** the spring/damper unit (8) is fastened to the semi-trailing link (1) or to a wheel support (7).

9. Semi-trailing link axle for a motor vehicle, according to Claim 1, **characterized in that** at least one transverse leaf spring which is connected to the semi-trailing link (1) or to a wheel support (7) is provided, and at least one damper which is connected to the flexible semi-trailing link (1) or to the wheel support (7) is provided for each wheel suspension system.

10. Semi-trailing link axle for a motor vehicle, according to Claim 1, **characterized in that** the semi-trailing link (1) is configured in one piece and its ends are screwed to one another, at least one of the connecting screws (14) having an eccentric, via which the track of the semi-trailing link (1) can be set.

11. Semi-trailing link axle for a motor vehicle, according to Claim 1, **characterized in that** an antiroll bar (6) is attached to a damper of the semi-trailing link axle, to the flexible semi-trailing link (1) or to a wheel support (7).

## Revendications

1. Essieu à bras obliques pour un véhicule automobile, **caractérisé en ce qu'**il présente, pour chaque roue (4) de l'essieu, un bras oblique (1) flexible autour de l'axe vertical, lequel est monté par le biais d'au moins un palier (2, 3) sur la caisse ou sur un châssis auxiliaire, chaque roue (4) de l'essieu étant connectée par le biais d'au moins un palier de roue (5) au bras oblique flexible respectif (1), de sorte que le bras oblique flexible (1) assure à lui seul le guidage de la roue.

2. Essieu à bras obliques pour un véhicule automobile selon la revendication 1, **caractérisé en ce que** le bras oblique (1) se compose de quatre organes (10, 11, 12, 13) formant un quadrilatère et accouplés par des régions d'accouplement, et les régions d'accouplement disposent de rigidités introduites spécifiquement, un premier organe (11) étant fixé par le biais d'au moins un palier à la caisse ou à un châssis auxiliaire, un deuxième organe (13) étant connecté à la roue (4) par le biais d'au moins le palier de roue (5) et le premier et le deuxième organe (11, 13) étant connectés l'un à l'autre par deux autres organes (10, 12).

3. Essieu à bras obliques pour un véhicule automobile selon la revendication 2, **caractérisé en ce que** les organes (10, 11, 12, 13) forment un quadrilatère dans un plan.

4. Essieu à bras obliques pour un véhicule automobile selon la revendication 2, **caractérisé en ce qu'**un centre de rotation virtuel (9) du bras oblique (1) se situe, dans la direction de marche avant, derrière une introduction de force latérale.

5. Essieu à bras obliques pour un véhicule automobile selon la revendication 2, **caractérisé en ce qu'**un centre de rotation virtuel (9) du bras oblique (1) se situe à l'extérieur d'une introduction de force de freinage dans la direction transversale du véhicule.

6. Essieu à bras obliques pour un véhicule automobile selon la revendication 1, **caractérisé en ce que** le bras oblique (1) est réalisé sous forme de composant en tôle ou de composant composite renforcé par des fibres.

7. Essieu à bras obliques pour un véhicule automobile selon la revendication 1, **caractérisé en ce que** pour chaque suspension de roue, il est prévu une unité d'amortissement à ressort (8).

8. Essieu à bras obliques pour un véhicule automobile selon la revendication 7, **caractérisé en ce que** l'unité d'amortissement à ressort (8) est fixée sur le bras oblique (1) ou sur un support de roue (7).

9. Essieu à bras obliques pour un véhicule automobile selon la revendication 1, **caractérisé en ce qu'**au moins un ressort à lame transversal connecté au bras oblique (1) ou à un support de roue (7) est prévu, et, pour chaque suspension de roue, au moins un amortisseur connecté au bras oblique flexible (1) ou au support de roue (7) est prévu.

10. Essieu à bras obliques pour un véhicule automobile selon la revendication 1, **caractérisé en ce que** le bras oblique (1) est réalisé d'une seule pièce et ses extrémités sont vissées l'une à l'autre, au moins l'une des vis de fixation (14) disposant d'un excentrique, par le biais duquel l'orientation du bras oblique (1) peut être ajustée.

11. Essieu à bras obliques pour un véhicule automobile selon la revendication 1, **caractérisé en ce qu'**un stabilisateur (6) est raccordé à un amortisseur de l'essieu à bras obliques, au bras oblique flexible (1) ou à un support de roue (7).
